Europäisches Patentamt

European Patent Office

Office européen des brevets

(19)

(11) Veröffentlichungsnummer : **0 171 555**
**B1**

(12) **EUROPÄISCHE PATENTSCHRIFT**

(45) Veröffentlichungstag der Patentschrift :
17.05.89

(51) Int. Cl.⁴ : **H 04 L 11/16**

(21) Anmeldenummer : 85107779.2

(22) Anmeldetag : 24.06.85

(54) Busleitungssystem mit zwei Signalleitern mit daran jeweils über zwei Differenzausgänge angeschlossenen Sendeeinrichtungen.

(30) Priorität : 20.07.84 DE 3426900

(43) Veröffentlichungstag der Anmeldung :
19.02.86 Patentblatt 86/08

(45) Bekanntmachung des Hinweises auf die Patenterteilung : 17.05.89 Patentblatt 89/20

(84) Benannte Vertragsstaaten :
AT BE CH DE FR GB IT LI NL SE

(56) Entgegenhaltungen :
WO--A--84 /008 62
US--A-- 3 671 671
US--A-- 4 337 434
BYTE, Band 6, Heft 10, Oktober 1981, Seiten 50-60; K. CLEMENTS et al.: "Ultra-low-cost network for personal computers"
IBM TECHNICAL DISCLOSURE BULLETIN, Band 20, Heft 10, März 1978, Seiten 4069-4070; J.P.L. HO: "Party line data transmission by balanced wire line"

(73) Patentinhaber : Siemens Aktiengesellschaft Berlin und München
Wittelsbacherplatz 2
D-8000 München 2 (DE)

(72) Erfinder : Milde, Gundolf, Dipl.-Ing.
Eichenstrasse 1
D-8000 München 70 (DE)

**Beschreibung**

Für einen schnellen Austausch von Digitalsignalen zwischen häufig wechselnden Gegenstellen (Stationen), beispielsweise zwischen Telekommunikations-Terminals, zwischen einer Datenverarbeitung dienenden Rechnern oder auch zwischen vermittlungtechnischen Prozessoren, finden vielfach Busleitungssysteme Anwendung, in denen die jeweils angeschlossenen Stationen über Sende- und Empfangseinrichtungen einen wahlfreien Zugriff (Random Access) zu dem Busleitungssystem haben. Die dabei von einer Station ausgesendeten Digitalsignale werden auf dem Bus nach beiden Seiten hin übertragen und nach Maßgabe vorangestellter Adressen nur von der (den) durch die Adresse(n) bezeichneten Station(en) aufgenommen. Für die Regelung des Zugriffs zum Busleitungssystem hat dabei besonders das sog. CSMA/CD-(Carrier Sense Multiplex Access with Collision Detection)-Verfahren Bedeutung : Bevor eine Station zu senden beginnt, horcht sie in den Bus hinein, ob dort bereits ein Übertragungsvorgang stattfindet. Zutreffendenfalls wartet sie zunächst dessen Ende ab ; dann beginnt die betreffende Station zu senden, wobei sie zunächst weiter « mithört », bis sie nach einer gewissen Zeitspanne (round trip delay time) sicher ist, daß alle anderen Stationen ihr Senden bemerken konnten. Hat in gleicher Weise eine andere Station etwa gleichzeitig zu senden begonnen, so werden beide Stationen eine Kollision ihrer Digitalsignale mit denen der jeweils anderen Station feststellen, woraufhin sie ihren Sendevorgang jeweils abbrechen, um nach einer Zufallszeitspanne damit erneut zu beginnen.

Eine einfache Methode, mit der ein Mehrfachsenden erkannt werden kann, besteht darin, daß die aktive Station das von ihr gerade abzugebende (und abgegebene) Signal mit dem an ihrer Empfangseinrichtung auf dem Busleitungssystem herrschenden Signalzustand vergleicht, wobei ein Signal (zustands) unterschied dann eine Kollision anzeigt. Die Erkennung eines solchen Signal (zustands) unterschiedes setzt voraus, daß sich auf dem Busleitungssystem der eine Signalzustand physikalisch stets gegenüber dem anderen Signalzustand (bei Binärsignalen) durchsetzt. Diese Signalpriorität muß dabei unabhängig von der Anzahl etwa gleichzeitig aktiver Sender auch bei großen Leitungslängen von mehr als 100 m für jede Station gewährleistet sein.

Diese Voraussetzung wird von heute marktüblichen Standardsendern mit zwei Differenzausgängen für ein Busleitungssystem mit zwei Signalleitern nicht erfüllt. Bei solchen Bussendern, die üblicherweise in Zeiten einer Inaktivität in einen dritten, Ruhezustand (Tristate) geschaltet sind, lassen sich bei takt- oder zugriffsgesteuerten Bussystemen Gegensignalzustände, die zu Signalverfälschungen oder Senderschäden durch Überlastung führen können, in diesem Ruhezustand vermeiden. Bei einem Random-Access-Bussystem basiert die Zugriffsregelung indessen einerseits gerade darauf, daß Gegensignalzustände auftreten können, wobei andererseits aber bei Einsatz üblicher Standard-Bussender solche Gegensignalzustände bei großen Leitungslängen von weit auseinanderliegenden Stationen wegen des Spannungsabfalls längs der Busleitung u. U. gar nicht erkannt werden.

Keine solche Standard-Bussender verwendet ein (aus WO-A-84/00862) bekanntes Busleitungssystem mit zwei Signalleitern, in dem im Prinzip zwei synchron miteinander geschlossene oder geöffnete Schalter, über die zwei - ungleiche - Spannungsquellen mit den zwei Signalleitern verbindbar sind, aufweisende Sendeeinrichtungen mit zwei Signalzuständen vorgesehen sind, deren einer einen Dominanzzustand in Busleitungssystem bewirkt und in deren anderem die betreffende Sendeeinrichtung die zwei Signalleiter zumindest angenähert unbelastet lässt. Dabei kann eine solche Sendeeinrichtung durch einen Spezialsender mit (innenwiderstands-) unsymmetrischen Differenzausgängen realisiert werden ; alternativ dazu ist es auch möglich, die genannten Schalter durch zwei gleichzeitig leitende oder gesperrte Transistoren zu realisieren, über die zwei ungleiche Spannungsquellen mit den beiden Signalleitern verbindbar sind. Ein solches Busleitungssystem benötigt somit Bussender mit speziellen Unsymmetrien, während Standard-Differenzsender möglichst (innenwiderstands-) symmetrische Komplementärausgänge aufweisen.

Keine Standard-Bussender, sondern jeweils eine mittels eines Transistorschalters ein- und ausschaltbare Konstantstromquelle aufweisende spezielle Sendeeinrichtungen sind auch in einem anderen (aus US-A-36 71 671) bekannten Busleitungssystem mit zwei Signalleitern vorgesehen.

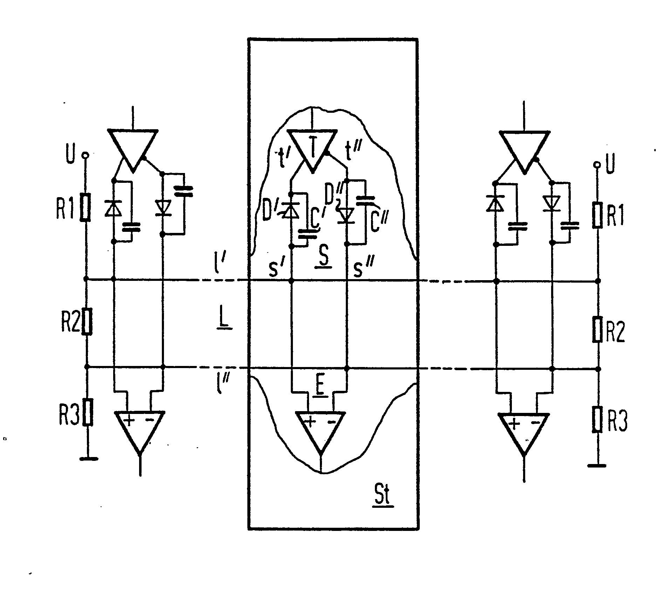

Mit nur einem einzigen Signalleiter schlechthin nicht symmetrisch ist schliesslich ein (aus BYTE 6(1981)10, 50... 60, Fig. 1) bekanntes weiteres Bussystem, in dem zwischen dem (einzigen) Ausgang jeder Sendeeinrichtung und dem (einzigen) Signalleiter eine Entkoppeldiode vorgesehen ist.

Die Erfindung stellt sich nun die Aufgabe, in einem Busleitungssystem mit zwei Signalleitern auch Bussender mit symmetrischen Komplementärausgängen einsetzen zu können, aber auch in einem ausgedehnten Busleitungssystem einerseits eine Überlastung von Senderausgängen bei Gegensignalzuständen zu vermeiden und andererseits eine sichere Erkennung solcher Gegensignalzustände zu ermöglichen.

Die Erfindung betrifft ein Busleitungssystem mit zwei Signalleitern mit daran jeweils über zwei Differenzausgänge angeschlossenen Sendeeinrichtungen mit zwei Signalzuständen, deren einer einen Dominanzsignalzustand im Busleitungssystem bewirkt und in deren anderem die betreffende Sendeeinrichtung die beiden Signalleiter zumindest angenähert unbelastet lässt ; dieses Busleitungssystem ist erfindungsgemäß dadurch gekennzeichnet, daß bei den jeweils aus einem zwei Differenzausgänge aufweisenden Bussender gebildeten Sendeeinrichtungen die zwei Differenzausgänge über zwei zueinander gegensinnige, in dem genannten anderen Signalzustand im Sperrzustand befindliche Dioden mit den zwei Signalleitern verbunden sind.

Die Erfindung, die, — ohne damit eine Verwendung von Tristate-Sendern auszuschließen, — einen Einsatz von einfachen Bussendern (ohne Tristate) ermöglicht, deren Komplementärausgänge symmetrisch ausgeführt sind, vermeidet einerseits eine Überlastung der Senderausgänge bei entgegengesetzten Signalzuständen und gewährleistet andererseits unabhängig von der Ausdehnung des Busleitungssystems und dem Abstand und der Anzahl etwa gleichzeitig aktiver Sender einen jeweils einheitlichen Signalzustand im Busleitungssystem und damit eine erhöhte Sicherheit in der Erkennung einer Kollision von Sendern beim gleichzeitigen Zugriff auf den Bus.

In weiterer Ausgestaltung der Erfindung können die Dioden mit Parallelkapazitäten versehen sein, was eine dynamische Höhenanhebung der Signale mit sich bringt, die durch den Skineffekt bedingten, bei größeren Leitungslängen merklichen Verlusten entgegenwirkt und zugleich eine Impulsbreitenverzerrung reduziert. Dabei können die Dioden selbst bereits entsprechende Kapazitätswerte aufweisen ; es ist aber auch möglich, den Dioden Zusatzkondensatoren parallelzuschalten. In einer weiteren Ausgestaltung der Erfindung können die Dioden auch bereits im Sender integriert sein.

Anhand der Zeichnung sei die Erfindung noch näher erläutert.

Die Zeichnung zeigt schematisch in einem zum Verständnis der Erfindung erforderlichen Umfange ein Dreileiter-Bussystem L mit zwei Signaladern l', l" und einer in der Zeichnung nicht eigens dargestellten, durch den Leitungsschirm (Masse, Erde) gegebenen Rückleiter ; ein solches Busleitungssystem kann vorzugsweise durch ein zwei verdrallte Adern aufweisendes geschirmtes Kabel mit einem Wellenwiderstand von beispielsweise 150 Ohm gebildet sein, wobei die zwei verdrallten Adern die in der Zeichnung dargestellten Signalleiter l', l" bilden. An die beiden Signalleiter l', l" sind jeweils über zwei Differenzausgänge s', s" Sendeeinrichtungen S angeschlossen ; diese Sendeeinrichtungen S mögen zusammen mit über Differenzeingänge +, — ebenfalls an die beiden Signalleiter l', l" angeschlossenen Empfangseinrichtungen E jeweils zu einer im übrigen nicht näher dargestellten Station St gehören, beispielsweise einem Telekommunikations-Endgerät, einem Rechner oder einem Vermittlungsprozessor.

Die Sendeeinrichtungen S weisen jeweils einen mit zwei Differenzausgängen t', t" versehenen Bussender T auf, bei dem es sich um einen neben zwei Signalzuständen auch noch einen Ruhezustand als dritten Zustand aufweisenden Tristate-Bussender beispielsweise des Typs AM26LS31 (AMD) oder SN74ALS1631 (TI) oder auch um einen keinen solchen dritten Zustand aufweisenden Bussender beispielsweise des Typs 9638 (Fairchild) handeln kann. In jedem Falle haben die Sendeeinrichtungen S zwei mögliche Signalzustände, wobei der (bei einer Sendeeinrichtung S gegebene) eine Signalzustand sich gegenüber dem (bei einer anderen Sendeeinrichtung gegebenen) anderen Signalzustand im Busleitungssystem L durchsetzt, d. h. einen Prioritätssignalzustand im Busleitungssystem bewirkt. In dem genannten anderen Signalzustand läßt die betreffende Sendeeinrichtung S die beiden Signalleiter l', l" — und damit auch die daran angeschlossenen Stationen — zumindest angenähert unbelastet : Hierzu sind in dem in der Zeichnung skizzierten Ausführungsbeispiel eines Busleitungssystems gemäßt der Erfindung bei den jeweils mit einem zwei Differenzausgänge t', t" aufweisenden Bussender T gebildeten Sendeeinrichtungen S die zwei Differenzausgänge t', t" über zwei in dem genannten anderen Signalzustand im Sperrzustand befindliche Dioden D', D" mit den zwei Signalleitern l', l" verbunden. Diese Dioden, die eine niedrige Durchlaßspannung und einen niedrigen Durchlaßwiderstand haben, schalten in dem genannten einen Signalzustand die an den beiden einen niedrigen Innenwiderstand aufweisenden Bussender-Ausgängen t' und t" auftretenden Potentiale praktisch unverändert auf die beiden Signalleiter l' bzw. l" durch, so daß dort in dem genannten einen Signalzustand die betreffenden Bussendepotentiale von beispielsweise etwa 0,9 V auf dem Signalleiter l' und etwa 2,7 V auf dem Signalleiter l" herrschen.

Befindet sich die gerade betrachtete Sendeeinrichtung S in ihrem anderen Signalzustand, in dem das Bussendepotential von im Beispiel etwa 0,1 V am Bussenderausgang t" auftritt und das Bussendepotential von im Beispiel etwa 3,7 V am Bussendeausgang t' auftritt, und herrschen gleichwohl von einer anderen Bussendeeinrichtung her die zuvor angegebenen Potentialverhältnisse auf den beiden Signalleitern l' und l", so sind die beiden Dioden D' und D" der gerade betrachteten Sendeeinrichtung S gesperrt, und die jetzt an ihren beiden Signalausgängen s' und s" jeweils einen gegenüber dem bei dem genannten einen Signalzustand - bei im Durchlaßzustand befindlichen Dioden - gegebenen niedrigen Innenwiderstand großen Innenwiderstand aufweisende Sendeeinrichtung S läßt die beiden Signalleiter l', l" praktisch unbelastet, mit anderen Worten, die Sendeeinrichtung S und die Signalleiter l', l" sind praktisch voneinander entkoppelt.

Damit auch dann, wenn sich gerade alle an das Busleitungssystem L angeschlossenen Sendeeinrichtungen in dem genannten anderen Signalzustand (oder auch in einem dritten, Inaktiv-Zustand (Tristate)) befinden, auf den Signalleitern l', l" eine definierte Signalspannung auftritt, können, wie dies auch aus der Zeichnung ersichtlich wird, die beiden Signalleiter l', l" an zumindest einen Spannungsteiler U-R1-R2-R3-Masse angeschlossen sein, dessen Innenwiderstand (R2||(R1 + R3)) groß gegenüber dem bei dem genannten einen Signalzustand gegebenen Innenwiderstand einer Sendeeinrichtung S ist. Dieser Spannungsteiler kann im Beispiel, zwischen einem Potential von 5 V und Masse liegend, mit zwei 330-Ohm-Widerständen R1, R3 und einem dazwischenliegenden 270-Ohm-Widerstand aufgebaut sein, womit er dann im betrachteten Betriebsfall ein Potential von etwa 3,2 V an den Signalleiter I' und ein Potential von etwa 1,8 V an den Signalleiter I" anlegt.

Um beim Übergang in diesen Betriebszustand die Signaleinschwingzeit des Busleitungssystems möglichst kurz zu halten, muß der Spannungsteiler genügend Strom liefern, so daß die zur Sperrung der Dioden erforderlichen Potentialwerte am Ende der Signalumschaltzeit erreicht sind. Hierzu kann der Innenwiderstand des Spannungsteilers zumindest angenähert gleich dem zwischen den beiden Signalleitern I', I" des Busleitungssystems L gegebenen Wellenwiderstand sein.

Wie aus der Zeichnung ersichtlich ist, kann ein zwei Enden aufweisendes Busleitungssystem L an beiden Enden einen Spannungsteiler der beschriebenen Art angeschlossen sein. In Abweichung von der zeichnerischen Darstellung ist es aber auch möglich, ein solches Busleitungsende mit einem an den Wellenwiderstand angepaßten Widerstand abzuschließen ; in der Zeichnung käme dann beispielsweise der rechte Spannungsteiler zum Wegfall, wobei dann an die Stelle des Spannungsteilerwiderstandes R2 ein dem Wellenwiderstand entsprechender Abschlußwiderstand treten würde.

Die Dioden D', D" können bereits im Bussender T integriert sein. Um bei höheren Betriebsfrequenzen auftretende, durch den Skin-Effekt bedingte Verluste auszugleichen, können die Dioden Parallelkapazitäten aufweisen, sei es, daß sie bereits von vornherein mit entsprechenden Parallelkapazitäten behaftet sind, sei es, daß den Dioden D', D" Zusatzkondensatoren C', C" parallelgeschaltet sind, wie dies auch in der Zeichnung angedeutet ist.

## Patentansprüche

1. Busleitungssystem (L) mit zwei Signalleitern (I', I") mit daran jeweils über zwei Differenzausgänge (s', s") angeschlossenen Sendeeinrichtungen (S) mit zwei Signalzuständen, deren einer einen Prioritätssignalzustand im Busleitungssystem (L) bewirkt und in deren anderem die betreffende Sendeeinrichtung (S) die beiden Signalleiter (I', I") zumindest angenähert unbelastet läßt, dadurch gekennzeichnet, daß bei den jeweils aus einem zwei Differenzausgänge (t', t") aufweisenden Bussender (T) gebildeten Sendeeinrichtungen (S) die zwei Differenzausgänge (t', t") über zwei zueinander gegensinnige, in dem genannten anderen Signalzustand im Sperrzustand befindliche Dioden (D', D") mit den zwei Signalleitern (I', I") verbunden sind.

2. Bussystem nach Anspruch 1, dadurch gekennzeichnet, daß die Dioden Parallelkapazitäten aufweisen.

3. Bussystem nach Anspruch 2, dadurch gekennzeichnet, daß den Dioden (D', D") Zusatzkondensatoren (C', C") parallelgeschaltet sind.

4. Bussystem nach einem der vorhergehenden Ansprüche, dadurch gekennzeichnet, daß die beiden Signalleiter (I', I") an zumindest einen Spannungsteiler (U-R1-R2-R3-Masse) angeschlossen sind, dessen Innenwiderstand groß gegenüber einem bei dem genannten einen Signalzustand gegebenen Innenwiderstand einer Sendeeinrichtung (S) ist.

5. Bussystem nach Anspruch 4, dadurch gekennzeichnet, daß der Innenwiderstand des Spannungsteilers (U-R1-R2-R3-Masse) zumindest angenähert gleich dem zwischen den beiden Signalleitern (I', I") des Busleitungssystems (L) gegebenen Wellenwiderstand ist.

6. Bussystem nach Anspruch 4 oder 5, dadurch gekennzeichnet, daß die beiden Signalleiter (I', I") mit einem angepaßten Widerstand abgeschlossen sind.

## Claims

1. Bus line system (L) with two signal conductors (I', I") connected to transmission devices (S) via two differential outputs (s', s") in each case, which transmission devices have two signal states, one of which effects a priority signal state in the bus line system (L) and in the other the transmission device (S) concerned leaves the two signal conductors (I', I") at least approximately unloaded, characterized in that, in the transmission devices (S) formed in each case by a bus transmitter (T), having two differential outputs (t', t"), the two differential outputs (t', t") are connected to the two signal conductors (I', I") via two mutually opposing diodes (D', D"), in a blocking state in the said other signal state.

2. Bus system according to Claim 1, characterized in that the diodes have parallel capacitances.

3. Bus system according to Claim 2, characterized in that additional capacitors (C', C") are connected in parallel with the diodes (D', D").

4. Bus system according to one of the preceding claims, characterised in that the two signal conductors (I', I") are connected to at least one voltage divider (U-R1-R2-R3-earth), the internal resistance of which is great compared with an internal resistance of a transmission device (S) existing in the case of the said one signal state.

5. Bus system according to Claim 4, characterized in that the internal resistance of the voltage divider (U-R1-R2-R3-earth) is as least approximately the same as the surge impedance existing between the two signal conductors (I', I") of the bus line system (L).

6. Bus system according to Claim 4 or 5, characterized in that the two signal conductors (I', I") are terminated by a matched resistor.

## Revendications

1. Système de ligne formant bus (L) comportant deux conducteurs de transmission de signaux (l', l"), comportant des dispositifs d'émission (S) raccordés à ces conducteurs respectivement par l'intermédiaire de deux sorties différentielles (s', s"), les signaux pouvant prendre deux états, un premier état de signal faisant apparaître un état de signal prioritaire dans le système de ligne formant bus (L), tandis que, dans l'autre état de signal, le dispositif d'émission considéré (S) laisse les deux conducteurs de transmission de signaux (l', l"), au moins approximativement non chargés, caractérisé par le fait que, dans les dispositifs d'émission (S) formés respectivement par un émetteur de bus (T) comportant deux sorties différentielles (t', t"), ces deux sorties différentielles (t', t") sont reliées aux deux conducteurs de transmission de signaux (l', l"), par l'intermédiaire de deux diodes (D', D") montées en opposition et situées à l'état bloqué, pour ledit autre état de signal.

2. Système formant bus suivant la revendication 1, caractérisé par le fait que les diodes possèdent des capacités en parallèle.

3. Système formant bus suivant la revendication 2, caractérisé par le fait que des condensateurs additionnels (c', c") sont branchés en parallèle avec les diodes (D', D").

4. Système formant bus suivant l'une des revendications précédentes, caractérisé par le fait que les deux conducteurs de transmission de signaux (l', l") sont raccordés à au moins un diviseur de tension (U-R1-R2-R3-masse), dont la résistance intérieure est grande par rapport à une résistance intérieure, déterminée pour ledit premier état de signal, d'un dispositif d'émission (S).

5. Système formant bus suivant la revendication 4, caractérisé par le fait que la résistance intérieure du diviseur de tension (U-R1-R2-R3-masse) est au moins approximativement égale à l'impédance caractéristique présente entre les conducteurs de transmission de signaux (l', l") du système de ligne formant bus (L).

6. Système formant bus suivant la revendication 4 ou 5, caractérisé par le fait que les deux conducteurs de transmission de signaux (l', l") sont terminés par une résistance adaptée.